Europäisches Patentamt

European Patent Office

Office européen des brevets

(11) Numéro de publication: **0 301 942**
**B1**

(12) **FASCICULE DE BREVET EUROPEEN**

(45) Date de publication du fascicule du brevet:
22.08.90

(51) Int. Cl.⁵: **B60R 13/06**

(21) Numéro de dépôt: 88401877.1

(22) Date de dépôt: 20.07.88

(54) Pièce réalisée à partir d'un profilé pour encadrement de glace coulissante.

(30) Priorité: 23.07.87 FR 8710462

(43) Date de publication de la demande:
01.02.89 Bulletin 89/5

(45) Mention de la délivrance du brevet:
22.08.90 Bulletin 90/34

(84) Etats contractants désignés:
BE DE ES GB IT NL SE

(56) Documents cités:
DE-A- 3 512 973
DE-U- 7 107 927
DE-U- 8 204 475
FR-A- 2 349 772
GB-A- 2 184 398

(73) Titulaire: ETABLISSEMENTS MESNEL SOCIETE
ANONYME DITE :, 9 et 11, Rue de la Rivière,
F-78420 Carrières-Sur-Seine(FR)

(72) Inventeur: Mesnel, François, 6bis, Rue Salignac Fénelon,
F-92200 Neuilly-sur-Seine(FR)
Inventeur: Mesnel, Gérard, 17, rue Victor Hugo,
F-78420 Carrières-sur-seine(FR)

(74) Mandataire: Jolly, Jean-Pierre et al, Cabinet BROT et
JOLLY 83, rue d'Amsterdam, F-75008 Paris(FR)

ACTORUM AG

## Description

La présente invention concerne une pièce réalisée à partir d'un profilé formant joint d'étanchéité pour glace coulissante, notamment pour portière d'automobile.

Il est connu d'utiliser dans ce but des systèmes d'étanchéité comprenant un profilé principal en caoutchouc ou en matière plastique armée, dont une partie en U coiffe en la pinçant une arête de l'encadrement de la vitre et dont une autre partie sert de logement à un profilé auxiliaire formant joint. Une ou des lèvres de ce joint viennent s'appliquer contre la face externe de la vitre coulissante, en position fermée de celle-ci, tandis que, sur l'autre face, vient s'appliquer une lèvre du profilé principal. Un tel profilé, à armature ajourée et dans lequel une partie métallique pleine est noyée dans la matière plastique en regard des évidements de l'armature, est décrit par exemple dans GB–A 2 184 398.

La réalisation de tels systèmes d'étanchéité comprenant deux pièces distinctes est cependant longue et relativement compliquée. Aussi a-t-on proposé d'utiliser des profilés monoblocs dont une partie, comme précédemment, est fixée sur l'encadrement de la vitre et comporte une lèvre qui prend appui contre la face externe de la vitre en position fermée de celle-ci, tandis qu'une autre partie, apte à se déplacer sous la sollicitation de la vitre mobile prend appui par des lèvres contre la tranche de celle-ci et contre sa face interne (voir demande de brevet allemand no 3 512 973).

Il est naturellement impératif que, dans de tels systèmes d'étanchéité, le profilé monobloc formant joint épouse rigoureusement la forme de l'encadrement de la glace et, en particulier, que la partie destinée à assurer l'étanchéité prenne parfaitement appui contre le fond de l'encadrement, dont a section est généralement en forme de U ou de L. Dans la pratique, ceci pose de sérieux problèmes, car cette partie du profilé en caoutchouc ou en matière plastique comporte nécessairement une âme métallique, collée ou "adhérisée" par un agent de collage caoutchouc-métal, pour conserver sa position dans l'encadrement après avoir été déformée pour épouser son profil. Or dans les parties d'angle de l'encadrement ou même dans les parties arrondies, dont la section transversale a souvent un profil compliqué et où une fuite d'air risque de se produire en position fermée de la glace, une telle conformation du profilé est difficile à réaliser et il est souvent nécessaire de modifier la géométrie du profilé, avec ou sans découpe préalable, par adjonction de caoutchouc par surmoulage, sur la partie correspondante du profilé, pour obtenir une étanchéité satisfaisante. Ceci complique naturellement les opérations de réalisation de la pièce et accroît le prix de revient.

La présente invention vise à remédier à cet inconvénient en proposant une pièce réalisée à partir d'un profilé monobloc en caoutchouc ou en matière plastique armée, formant joint d'étanchéité pour encadrement de vitre coulissante, qui puisse épouser parfaitement, par simple déformation, le profil de l'encadrement, même dans les parties en angle ou arrondies de celui-ci, sans nécessiter d'addition de caoutchouc ou de matière plastique après déformation.

A cet effet, l'invention a pour objet une pièce réalisée à partir d'un profilé monobloc en caoutchouc ou en matière plastique, au moins partiellement armé, destiné à équiper un encadrement de glace coulissante de profil complémentaire, à section en L ou en U, et dont une partie au moins forme joint d'étanchéité pour ladite glace en position de fermeture de celle-ci, ce profilé étant du type comprenant une première partie à section en U, qui coiffe en la pinçant une feuillure dudit encadrement, tandis qu'une seconde partie, attenante à la précédente et destinée à venir en contact avec la tranche de la vitre coulissante en position fermée de celle-ci, prend appui contre une surface de fond dudit encadrement sensiblement perpendiculaire à ladite feuillure ou dirigée obliquement par rapport à celle-ci pièce du type divulgué par GB–A 2 184 398), cette pièce étant caractérisée en ce que la portion de ladite seconde partie en contact avec la base du L ou du U dudit encadrement comporte une âme en un métal ou alliage de qualité emboutissable.

Dans les parties d'angle et/ou de section complexe de l'encadrement, il sera ainsi possible de déformer cette seconde partie par allongement du métal ou de l'alliage qui en constitue l'âme, pour lui faire épouser étroitement le profil de cet encadrement.

Cette âme pourra être constituée, par exemple, d'aluminium.

Le caoutchouc (ou la matière plastique) utilisé sera naturellement d'une nature telle qu'il puisse se conformer aux déformations de l'aluminium, au cours de l'emboutissage de celui-ci, et qu'il conserve ses propriétés dans le temps, sans vieillissement, de manière à maintenir une étanchéité parfaite de la vitre coulissante. Dans ce but, on pourra utiliser, notamment, des polymères polyoléfiniques tels que EPT ou EPDM, ou des polymères polyoléfiniques modifiés, tels que les polyéthylènes chlorés ou chlorosulfonés. Bien entendu, cette liste n'est pas limitative.

La première partie en U du profilé coiffant une feuillure de l'encadrement pourra elle aussi comprendre une âme métallique et être alors composée de caoutchouc souple. Son âme pourra être d'un seul tenant avec celle de la seconde partie du profilé, et elle sera dans ce cas en métal ou alliage emboutissable. Cette âme pourra aussi être distincte de l'âme de la seconde partie et elle pourra alors être constituée par exemple, d'aluminium dur adhérisé.

Cette première partie du profilé pourra enfin ne pas comporter d'âme métallique et elle sera alors constituée de caoutchouc dur la rendant apte à pincer la partie de l'encadrement qu'elle coiffera.

Naturellement, dans toutes ces variantes, le profilé pourra comprendre, de façon connue, une ou des lèvres destinées à venir au contact au moins de la face interne de la vitre pour assurer l'étanchéité en position fermée de celle-ci. Ces diverses formes de mise en œuvre de l'invention, qui n'ont pas de caractère limitatif, sont illustrées par les dessins annexés.

Sur ces dessins:

La figure 1 est une vue schématique en plan d'un profilé formant joint conforme à l'invention ;

La figure 2 est une vue en perspective à plus grande échelle, avec coupe partielle, d'une première forme de réalisation d'un tel profilé ;

La figure 3 montre comment le profilé des figures 1 et 2 coopère avec la vitre mobile d'une portière d'automobile pour assurer l'étanchéité de cette vitre dans les angles ;

La figure 4a est une coupe transversale suivant le plan IV A-IV A de la figure 2 ;

La figure 4b est une coupe transversale suivant le plan IV B-IV B de cette même figure 2 ;

Les figures 5a et 5b sont des vues équivalentes aux figures 4a et 4b d'une seconde forme de réalisation de l'invention ;

Les figures 6a et 6b sont des vues équivalentes aux figures 4a et 4b d'une troisième forme de réalisation de l'invention ;

Les figures 7a et 7b sont des vues équivalentes aux figures 4a et 4b d'une quatrième forme de réalisation de l'invention.

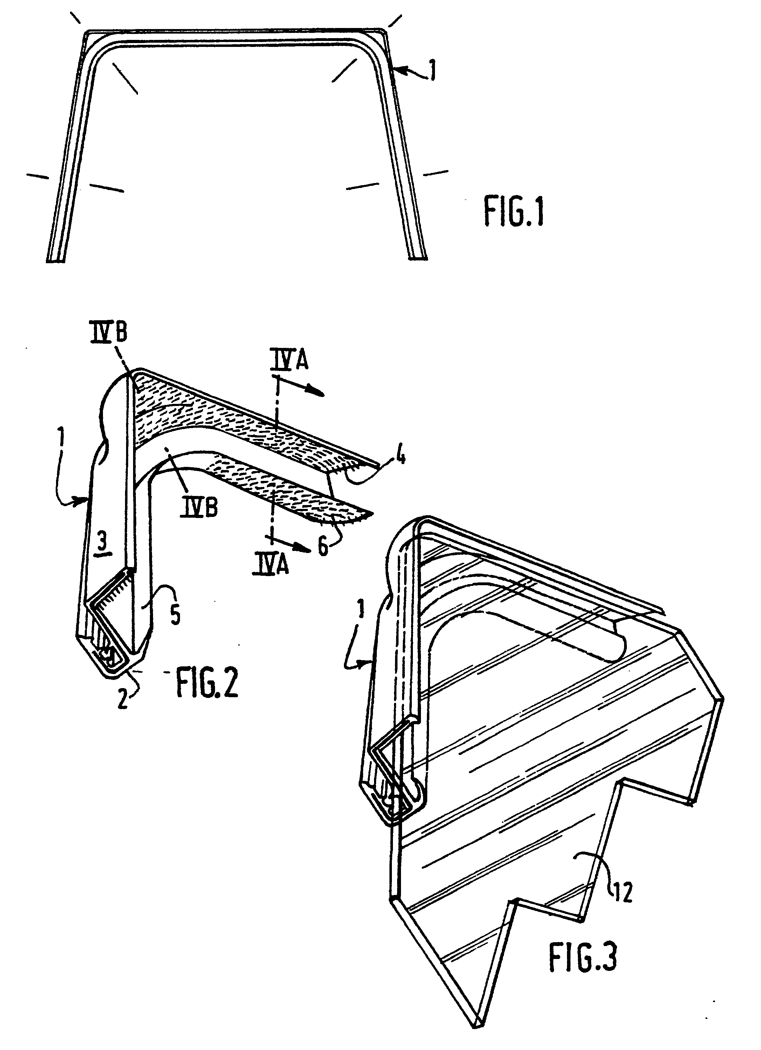

Le profilé 1 représenté sur les figures 1 à 3 et 4a, 4b, est destiné à équiper un encadrement d'une vitre coulissante 12 de portière d'automobile de forme générale correspondante. Dans les angles, cet encadrement a un profil angulaire marqué et il est donc nécessaire, comme on le voit sur la figure 3, que le profilé épouse étroitement cette forme, afin d'assurer une parfaite étanchéité de la glace 12 en position de fermeture, sans passage d'air dans des angles.

Comme on le voit sur la figure 2, ce profilé comprend une partie à section en U, 2, destinée à coiffer et à pincer une feuillure de l'encadrement, et une partie 3, formant semelle, attenante à la précédente et destinée à venir prendre place au fond de l'encadrement. C'est contre cette partie 3 que la vitre vient prendre appui en position relevée et, en vue d'assurer l'étanchéité dans cette position, cette semelle 3 est revêtue de fibres 4 déposées par flocage électrostatique. Une lèvre souple 5, attenante à la base de la partie 2 et apte à être recourbée vers la semelle 3 par la vitre mobile 12, lorsque celle-ci est sollicitée vers sa position de fermeture, comporte sur sa surface externe, destinée à venir en contact avec la face interne de la vitre, des fibres 6 propres à assurer l'étanchéité.

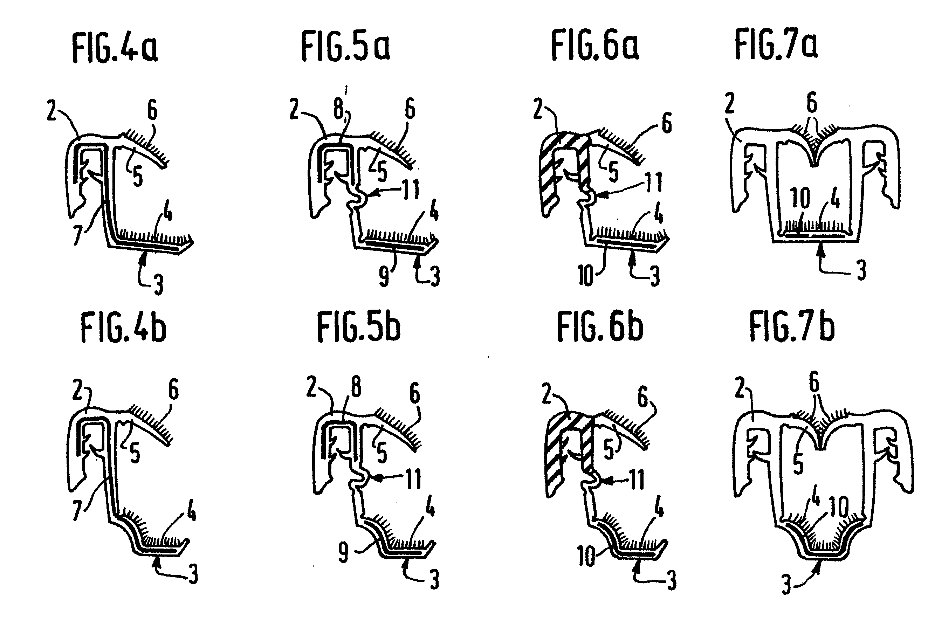

Dans la forme de réalisation des figures 2, 4a et 4b, le profilé est en caoutchouc souple et comporte une âme métallique 7 s'étendant de façon continue dans la partie en U, 2, et dans la semelle 3. Cette âme 7 est en métal ou alliage emboutissable, par exemple en aluminium emboutissable, ce qui permet de déformer cette âme par allongement du métal, en vue de faire épouser parfaitement à la semelle 3 la forme de l'encadrement. Ceci apparaît clairement dans l'angle des figures 2, 3, et ressort de la comparaison des figures 4 a et 4b, qui sont respectivement des coupes dans une zone sans déformation sensible du profilé et dans une zone à déformation importante (angle de l'encadrement).

Dans la variante des figures 5a et 5b, où les éléments déjà décrits sont désignés par les mêmes chiffres de référence, le profilé est également en caoutchouc souple, mais comporte deux âmes métalliques distinctes pour les parties 2 et 3. La partie en U, 2, comporte une âme 8 en aluminium dur, lui permettant de pincer fermement la feuillure de l'encadrement qu'elle coiffe. Par contre, comme précédemment, la semelle 3 comporte une âme métallique 9 en aluminium de qualité emboutissable, lui permettant de se conformer au profil de l'encadrement.

Dans la forme de réalisation des figures 6a et 6b, où les organes décrits sont à nouveau désignés par les mêmes chiffres de référence, la partie en U, 2, ne comporte pas d'armature métallique, mais est en caoutchouc dur, lui permettant de pincer par elle-même la feuillure associée de l'encadrement. La semelle 3 et la lèvre 5 sont en caoutchouc souple, mais, comme précédemment, la semelle 3 comporte une âme métallique 10 en aluminium de qualité emboutissable lui permettant de se déformer par allongement, comme on le voit sur la figure 5b.

On notera que, dans les formes de réalisation des figures 6a et 6b, la partie 11 du profilé réunissant la partie en U, 2, et la semelle 3 forme une charnière souple, conférant au profilé une certaine souplesse et lui permettant de se déformer plus facilement.

Enfin, dans la forme de réalisation des figures 7a et 7b, où les organes déjà décrits sont à nouveau désignés par les mêmes chiffres de référence que précédemment, le profilé a une forme générale en U, en vue d'équiper un encadrement de profil complémentaire, et il présente une symétrie par rapport à un plan médian, chaque moitié correspondant au profilé des figures 6a et 6b. La partie 3 du profilé est constituée par la base de U et c'est elle qui est équipée d'une armature métallique 10 emboutissable.

L'invention apporte donc une solution simple, facile à mettre en oeuvre et peu coûteuse au problème posé par la conformation exacte des profilés monoblocs, formant joints d'étanchéité, au profil des encadrements de vitres mobiles.

## Revendications

1. Pièce réalisée à partir d'un profilé extrudé monobloc en caoutchouc ou en matière plastique, au moins partiellement armée, destinée à équiper un encadrement de glace coulissante de profil complémentaires, à section en L ou en U, et dont une partie au moins forme joint d'étanchéité pour ladite glace en position de fermeture de celle-ci, ce profilé étant du type comprenant une première partie (2) à section en U, qui coiffe en la pinçant une feuillure dudit encadrement, tandis qu'une seconde partie (3), attenante à la précédente et destinée à venir en contact avec la tranche de la vitre coulissante en position fermée de celle-ci, prend appui contre une surface de fond dudit encadrement sensiblement perpendiculaire à ladite feuillure ou dirigée obliquement par rapport à celle-ci, cette pièce étant caractérisée en ce que la portion de ladite seconde partie en contact avec la base du L ou du U dudit encadrement comprend une âme (7, 9, 10) en un métal ou alliage de qualité emboutissable.

2. Pièce selon la revendication 1, en matière souple, caractérisée en ce que ladite première partie en U (2) comporte une âme métallique (7) d'un seul tenant avec celle de ladite seconde partie (3).

3. Pièce selon la revendication 1, en matière souple caractérisée en ce que ladite première partie en U (2), comporte une âme métallique (8) distincte de l'âme (3) de ladite seconde partie.

4. Pièce selon la revendication 1, caractérisée en ce que ladite première partie en U (2) est en un matériau dur et est dépourvue d'âme métallique.

## Patentansprüche

1. Profilleiste, die einstückig aus Kautschuk oder Kunststoffmaterial extrudiert ist, mindestens teilweise armiert ist und dazu bestimmt ist, eine Schiebefenstereinfassung mit komplementärem Profil auszustatten, welches Profil im Schnitt die Form eines L oder eines U aufweist, und an welcher Profilleiste mindestens ein Teil eine Dichtverbindung für die Scheibe in der geschlossenen Stellung dieser bildet, wobei das Profil derart ausgestaltet ist, daß es einen ersten Teil (2) in Form eines U, der klemmend einen Falz der Einfassung abdeckt, wie auch einen zweiten Teil (3) aufweist, der an dem vorerwähnten angrenzt und dazu bestimmt ist, mit der Scheibe des Schiebefensters in der geschlossenen Stellung desselben in Berührung zu kommen, und sich an einer Oberfläche des Bodens der Einfassung im wesentlichen senkrecht zu dem Falz oder schräg geleitet mit Rücksicht auf diesen abstützt, wobei die Profilleiste dadurch gekennzeichnet ist, daß der Bereich des besagten zweiten Teils, der in Berührung mit der Basis des L oder des U der Einfassung ist, eine Seele (7, 9, 10) aus Metall oder einer Legierung von eindrückbarer Qualität aufweist.

2. Profilleiste nach Anspruch 1, aus weichem Material, dadurch gekennzeichnet, daß der besagte erste Teil in U-Form (2) eine metallische Seele (7) aufweist, die einstückig mit derjenigen des zweiten Teils (3) ist.

3. Profilleiste nach Anspruch 1, aus weichem Material, dadurch gekennzeichnet, daß der erste Teil in Form eines U (2) eine metallische Seele (8) aufweist, die von der Seele (3) des zweiten Teils getrennt ist.

4. Profilleiste nach Anspruch 1, dadurch gekennzeichnet, daß der erste U-förmige Teil (2) aus einem harten Material ist und nicht mit einer metallischen Seele versehen ist.

## Claims

1. A component made from a one-piece extruded shaped member of rubber or plastics material, which component is at least partially reinforced and is intended to be fitted to a sliding window frame structure of complementary configuration, of L-shaped or U-shaped cross-section, and of which a part at least forms a seal for said window in the closed position thereof, said shaped member being of the type comprising a first part (2) of U-shaped section, which fits in gripping engagement over a rabbet portion of said frame structure while a second part (3) which adjoins the preceding part and which is intended to come into contact with the edge of the sliding window in the closed position thereof bears against a bottom surface of said frame structure which is substantially perpendicular to said rabbet portion or directed obliquely with respect thereto, said component being characterised in that the portion of said second part which is in contact with the base of the L or the U of said frame structure comprises a core (7, 9, 10) of a metal or alloy of stampable or pressable quality.

2. A component according to claim 1 of flexible material characterised in that said first part (2) of U-section comprises a metal core (7) in one piece with that of said second part (3).

3. A component according to claim 1 of flexible material characterised in that said first part (2) of U-section comprises a metal core (8) which is separate from the core (3) of said second part.

4. A component according to claim 1 characterised in that said first part (2) of U-section is of a hard material and is without a metal core.

FIG.1

IVB

IVA

1

4

IVB

3

6

IVA

5

FIG.2

2

1

FIG.3

12

FIG.4a

FIG.5a

FIG.6a

FIG.7a

FIG.4b

FIG.5b

FIG.6b

FIG.7b

EP 0 301 942 B1